# EUROPEAN PATENT APPLICATION

(11) **EP 4 835 654 A1**
(43) Date of publication of application: **04.11.2026**
(21) Application number: 24910896.0
(22) Date of filing: 18.12.2024
(51) Int. Cl.: G06F 9/451

(54) **INTERACTION METHOD AND APPARATUS, DEVICE, AND STORAGE MEDIUM**

(30) Priority: 25.12.2023 CN 202311801558
(71) Applicant: Beijing Zitiao Network Technology Co., Ltd., Beijing 100190 (CN)
(72) Inventor: ZHOU, Zijun, Beijing 100028 (CN); ZHANG, Tiantian, Beijing 100028 (CN); CHI, Cheng, Beijing 100028 (CN)
(74) Representative: Marks & Clerk LLP
(86) International application number: PCT/CN2024/140380
(87) International publication number: WO 2025/139965

(57) **Abstract**

The embodiments of the disclosure relate to an interaction method, apparatus, device, and storage medium. The method proposed herein includes: presenting a target interface associated with a target object; providing, in response to determining that the target object is configured with a corresponding virtual object, an access entry associated with the virtual object in the target interface; and presenting, based on a selection of the access entry, an interactive interface with the virtual object, the interactive interface being configured to support multimodal interaction between a current user and the virtual object.

## Description

This application claims priority to Chinese Patent Application No. 202311801558.5, filed on December 25, 2023, and entitled "INTERACTION METHOD, APPARATUS, DEVICE, AND STORAGE MEDIUM", which is hereby incorporated by reference in its entirety.

### TECHNICAL FIELD

Example embodiments of the present disclosure generally relate to the field of computers, and in particular, to an interaction method, apparatus, device, and computer-readable storage medium.

### BACKGROUND

With the development of computer technologies, the Internet has become an important platform for people to exchange information. For example, people may share various works through the platform, and may also obtain works shared by other users.

### SUMMARY

In a first aspect of the present disclosure, an interaction method is provided. The method includes: presenting a target interface associated with a target object; providing, in response to determining that the target object is configured with a corresponding virtual object, an access entry associated with the virtual object in the target interface; and presenting, based on a selection of the access entry, an interactive interface with the virtual object, the interactive interface being configured to support multimodal interaction between a current user and the virtual object.

In a second aspect of the present disclosure, an interaction apparatus is provided. The apparatus includes: a first presenting module configured to present a target interface associated with a target object; an entry providing module configured to provide, in response to determining that the target object is configured with a corresponding virtual object, an access entry associated with the virtual object in the target interface; and a second presenting module configured to present, based on a selection of the access entry, an interactive interface with the virtual object, the interactive interface being configured to support multimodal interaction between a current user and the virtual object.

In a third aspect of the present disclosure, an electronic device is provided. The device includes at least one processing unit; and at least one memory coupled to the at least one processing unit and storing instructions executable by the at least one processing unit. The instructions, when executed by the at least one processing unit, causes the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

It should be understood that the content described in this Summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages, and aspects of the embodiments of the present disclosure will become more apparent in combination with the drawings and with reference to the following detailed description. In the drawings, the same or similar reference numerals represent the same or similar elements.
Fig. 1 is a schematic diagram of an example environment in which the embodiments according to the present disclosure may be implemented;
Fig. 2A to Fig. 2F show example interfaces according to some embodiments of the present disclosure;
Fig. 3 is a flowchart of an example interaction process according to some embodiments of the present disclosure;
Fig. 4 is a schematic structural block diagram of an interaction apparatus according to some embodiments of the present disclosure; and
Fig. 5 is a block diagram of an electronic device capable of implementing a plurality of embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and embodiments of the present disclosure are only for illustrative purposes, and are not intended to limit the protection scope of the present disclosure.

It should be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different section/subsection in any manner.

In the description of the embodiments of the present disclosure, the term "include/comprise" and similar terms should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". Other definitions, either explicit or implicit, may also be included below. The terms "first", "second", etc. may refer to different or same objects. Other definitions, either explicit or implicit, may also be included below.

The embodiments of the present disclosure may involve user data, data acquisition, and/or data use. These aspects all follow the corresponding laws, regulations, and related provisions. In the embodiments of the present disclosure, all data collection, acquisition, processing, machining, forwarding, and use are carried out on the premise that the user is aware and confirms. Accordingly, when implementing the embodiments of the present disclosure, it is necessary to inform the user of the type, use range, use scenario, etc., of data or information that may be involved, and obtain the authorization of the user, through appropriate means in accordance with relevant laws and regulations. A specific manner of informing and/or authorizing may be changed according to actual situations and application scenarios, and the scope of the present disclosure is not limited in this regard.

If the solutions in this specification and the embodiments involve personal information processing, the processing is carried out on the premise that there is a legal basis (for example, the consent of the personal information subject is obtained, or it is necessary for the performance of a contract, etc.), and the processing is only carried out within a specified or agreed scope. If a user refuses to process personal information other than necessary information required for basic functions, it does not affect the user's use of the basic functions.

The Internet provides people with various interaction ways. For example, people may interact with a live streamer through a live streaming room, and may also interact with other users through private messages. However, a user may receive a large number of messages, thus how to effectively ensure that the messages are processed in a timely and efficient manner is the focus of people's attention.

The embodiments of the present disclosure provide an interaction solution. According to the solution, a target interface associated with a target object may be presented; in response to determining that the target object is configured with a corresponding virtual object, an access entry associated with the virtual object is provided in the target interface; and based on a selection of the access entry, an interactive interface with the virtual object is presented, wherein the interactive interface is used to support multimodal interaction between a current user and the virtual object.

Various example implementations of the solution will be described in detail below with further reference to the drawings.

### Example Environment

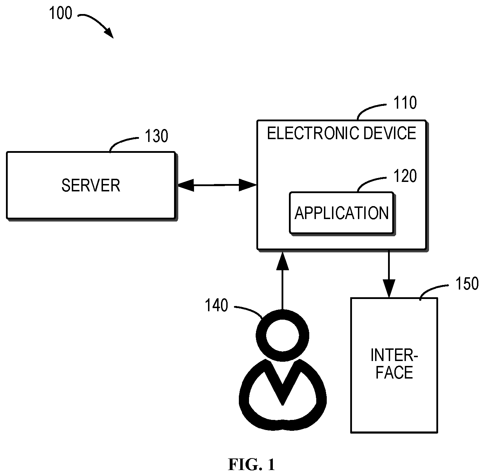

Fig. 1 is a schematic diagram of an example environment 100 in which the embodiments of the present disclosure may be implemented. As shown in Fig. 1, the example environment 100 may include an electronic device 110.

In the example environment 100, the electronic device 110 may run an application 120 supporting interface interaction. The application 120 may be any appropriate type of application for interface interaction, examples of which may include but are not limited to a video application, a social application, or other appropriate applications. A user 140 may interact with the application 120 via the electronic device 110 and/or its attached devices.

In the environment 100 of Fig. 1, if the application 120 is in an active state, the electronic device 110 may present, through the application 120, an interface 150 supporting interface interaction.

In some embodiments, the electronic device 110 communicates with a server 130 to implement provision of services of the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including accessories and peripherals of these devices or any combination thereof. In some embodiments, the electronic device 110 may also support any type of user-specific interface (such as a "wearable" circuit, etc.).

The server 130 may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide backstage services for the application 120 supporting virtual scenes in the electronic device 110.

A communication connection may be established between the server 130 and the electronic device 110. The communication connection may be established in a wired or wireless manner. The communication connection may include but is not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection therebetween.

It should be understood that the structure and functions of the elements in the environment 100 are described for illustrative purposes only, without suggesting any limitation to the scope of the present disclosure.

Some example embodiments of the present disclosure will be described below with continued reference to the drawings.

### Example Interaction

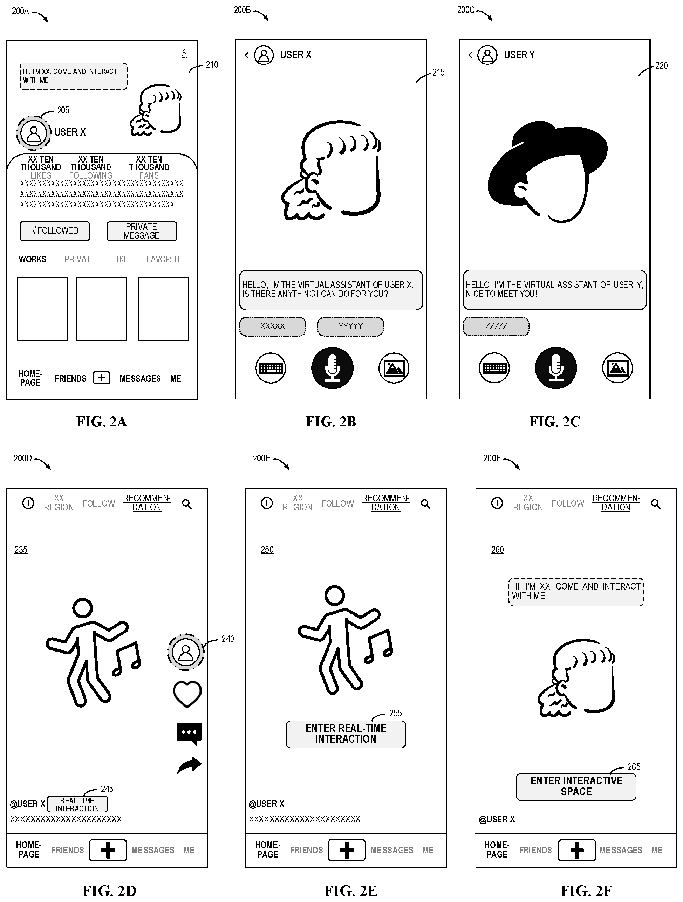

An example interaction process according to the embodiments of the present disclosure will be described below with reference to Fig. 2A to Fig. 2F. Fig. 2A to Fig. 2F show example interfaces 200A to 200F according to some embodiments of the present disclosure. The interfaces 200A to 200F may be provided by the electronic device 110 as shown in Fig. 1.

As shown in Fig. 2A, the interface 200A may be an interface associated with a target object (for example, a user X). For example, the interface 200A may be a personal homepage of the target object.

In some embodiments, it may be determined whether the target object is configured with a corresponding virtual object. As an example, the target object may enable or disable the corresponding virtual object, for example, through a configuration operation.

As shown in Fig. 2A, if it is determined that the target object is configured with the corresponding virtual object, the electronic device 110 may provide an access entry associated with the virtual object in the interface 200A.

In some embodiments, the electronic device 110 may provide an indication element 205 corresponding to the access entry in association with identification information (for example, an image identification or a text identification) of the target object. For example, the electronic device 110 may display, around an avatar of the target object, the indication element 205 for representing that the target object is configured with the virtual object, and may enter an interactive interface with the virtual object through the indication element 205.

As an example, after receiving the selection of the indication element 205, the electronic device 110 may display the interface 200B as shown in Fig. 2B. The interface 200B may correspond to an interactive interface between the current user and the virtual object.

In some embodiments, the interface 200B may support multimodal interaction between the current user and the virtual object. Such multimodal interaction may include a variety of interactions including: text interaction, voice interaction, video interaction, or picture interaction.

As an example, the user may input text content, audio content, video content, picture content, and the like through an input control provided in the interface 200B, and may receive reply content from the virtual object. Such reply content may also include text content, audio content, video content, picture content, link content, and the like.

In some embodiments, the interface 200B may provide an interactive container 215 (also referred to as an interactive space) for supporting multimodal interaction between the current user and the virtual object. In some embodiments, the participants in the interactive container may only include the current user and the virtual object. In this way, the embodiments of the present disclosure may provide the current user with a one-to-one space for multimodal interaction with respect to the virtual object.

In some embodiments, the electronic device 110 may further receive a preset operation of the user in the interface 200B, and may switch to display the interface 200C. The interface 200B is also referred to as a first interactive interface, and the interface 200C is also referred to as a second interactive interface.

As shown in Fig. 2C, the interface 200C may be a second interactive interface with a second virtual object, where the second virtual object corresponds to another object (for example, a user Y) different from the target object. For example, the electronic device 110 may switch to display an interactive interface with other virtual object based on a swiping operation received in the interface 200B by the user along a predetermined direction.

Based on this approach, the embodiments of the present disclosure may further facilitate the user to switch to interact with different virtual objects, thereby improving interaction efficiency.

In some embodiments, the electronic device 110 may further provide the access entry associated with the virtual object in other appropriate manners. Continuing to refer to Fig. 2A, in a case where the interface 200A is the personal homepage of the target object, the electronic device 110 may further present a visual element associated with the virtual object in a background area 210 of the personal homepage, so that the background area corresponds to the access entry.

As an example, as shown in Fig. 2A, the electronic device 110 may display a visual image of the virtual object and/or corresponding text information (for example, personal introduction) and the like in the background area 210. For example, the electronic device 110 may present the interface 200B as shown in Fig. 2B based on the user's triggering of the background area 210 to support multimodal interaction between the current user and the virtual object.

In some embodiments, the electronic device 110 may further provide the access entry in other interfaces associated with the target object.

Fig. 2D shows an example interface 200D according to some embodiments of the present disclosure. The interface 200 may correspond to, for example, a viewing interface of a work 235 of the target object (for example, the user X).

Similar to Fig. 2A, the electronic device 110 may present an indication element 240 in association with identification information (for example, an avatar) of the target object. The indication element 240 may indicate that the target object is configured with a corresponding virtual object. Further, the user may also access the interactive interface 200B with the virtual object by clicking on the indication element 240, for example.

In some embodiments, the electronic device 110 uses, for example, the indication element associated with the identification information to represent whether the target object is in a live streaming state. As an example, in response to the target object being in the live streaming state, the electronic device 110 may modify the indication element associated with the virtual object (also referred to as a first indication element, for example, the indication element 205 or the indication element 240) to a second indication element. Different from the first indication element, the second indication element corresponds to, for example, a second access entry of a live streaming interface of the target object.

Taking a display element around the avatar of the target object as an example, if the target object is in the live streaming state, the electronic device 110 may present the display element in a first style. On the contrary, if the target object is not in the live streaming state and is configured with the corresponding virtual object, the electronic device 110 may display the display element in a second style.

In some embodiments, the indication element 205 or the indication element 240 may have a dynamic display style. For example, the indication element 205 or the indication element 240 may have a style of breathing light.

In some embodiments, the electronic device 110 may further present an indication element 245 corresponding to the access entry in association with a text identification (for example, a user name) of the target object.

Fig. 2E shows an example interface 200E according to some embodiments of the present disclosure. As shown in Fig. 2E, the interface 200E may correspond to, for example, a viewing interface of a work 250 of the target object (for example, the user X).

In some embodiments, as shown in Fig. 2E, the electronic device 110 may further display the interface 200E associated with the target object. The electronic device 110 may further present, for example, an indication element 255 corresponding to the access entry in a work play area of the interface 200E. As yet another example, the electronic device 110 may further display an indication element (not shown in the figure) corresponding to the access entry in association with identification information of the work (for example, a work name) corresponding to the interface (for example, the interface 200E).

In some embodiments, as shown in Fig. 2F, the electronic device 110 may further display an interface 200F associated with the target object. The interface 200F may correspond to a viewing interface of media content 260. The target media content 260 may correspond to, for example, preview content of the virtual object corresponding to the target object (for example, the user X).

For example, the electronic device 110 may display a visual image, text information, audio information, etc. of the virtual object in the interface 200F. Further, the electronic device 110 may provide an indication element 265 corresponding to the access entry in the interface 200F.

In some embodiments, the target interface for providing the access entry may be an interface for presenting target media content in a media content stream. As an example, the media content played in the interface 200D, the interface 200E, and the interface 200F may come from the media content stream.

In some scenarios, the media content stream may also be referred to as a Feed stream, for example. As an example, the media content stream may include a plurality of items of media content recommended for the current user. In addition, the media content displayed by the media content stream may also be changed accordingly based on a switching operation.

For example, the interface 200D, the interface 200E, and/or the interface 200F may also switch to present another piece of media content in the media content stream based on the switching operation (for example, an up-sliding operation or a down-sliding operation) for the media content stream.

In some embodiments, the target media content provided in the media content stream may include a media work associated with the target object. For example, the interface 200D may correspond to the media work posted by the target object. As another example, the media work associated with the target object may further include, for example, a media work that is favorited or liked by the target object.

In some embodiments, the target media content provided in the media content stream may include preview content associated with a live streaming event of the target object. For example, the media content stream may present the preview content of the live streaming room of the target object. Accordingly, the electronic device 110 may also provide the access entry with the virtual object in association with the preview content.

In some embodiments, the target media content provided in the media content stream may include preview content associated with the virtual object. For example, as discussed with reference to Fig. 2F, the media content 260 may provide the preview content associated with the virtual object, examples of which may include but are not limited to: a visual image, text information, audio information, etc. of the virtual object.

In addition, it should be understood that the virtual object may support multimodal interaction with the current user based on any appropriate technology, and the present disclosure is not intended to limit the driving technology of the virtual object.

Based on the interaction process discussed above, the embodiments of the present disclosure may provide an interactive entry with the virtual object in the interface associated with the target object depending on whether the target object is configured with the corresponding virtual object. In this way, the embodiments of the present disclosure may facilitate other users to perceive that the target object is configured with the virtual object, and may initiate multimodal interaction with the virtual object more conveniently.

### Example Process

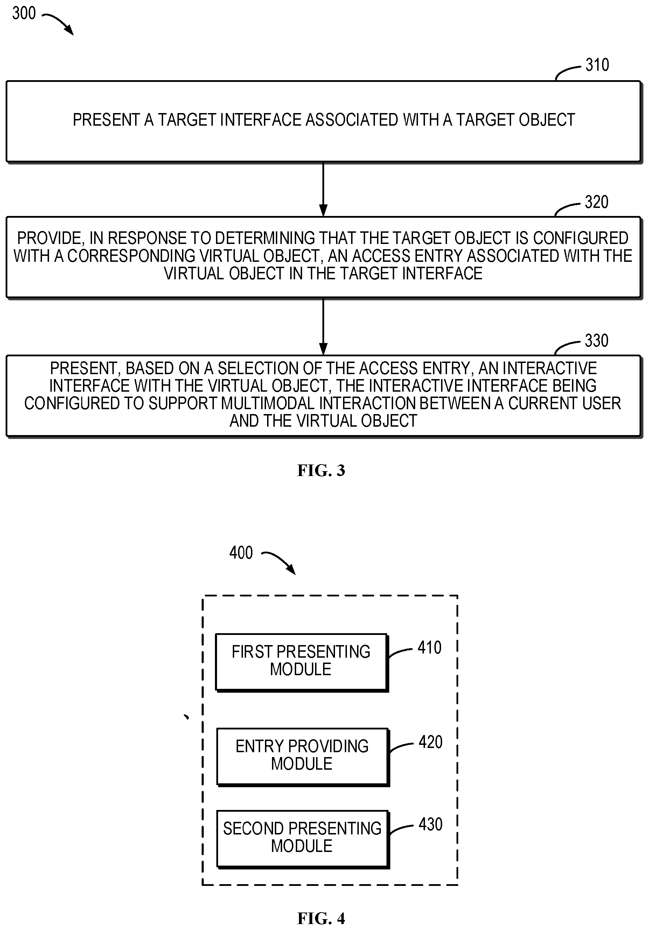

Fig. 3 is a flowchart of an example interaction process 300 according to some embodiments of the present disclosure. The process 300 may be implemented at the electronic device 110. The process 300 is described below with reference to Fig. 1.

As shown in Fig. 3, at a block 310, the electronic device 110 presents a target interface associated with a target object.

At a block 320, in response to determining that the target object is configured with a corresponding virtual object, the electronic device 110 provides, in the target interface, an access entry associated with the virtual object.

At a block 330, the electronic device 110 presents, based on a selection of the access entry, an interactive interface with the virtual object, wherein the interactive interface is used to support multimodal interaction between a current user and the virtual object.

In some embodiments, the target interface displays first identification information of the target object, and providing the access entry associated with the virtual object in the target interface includes: presenting, in association with the first identification information of the target object, a first indication element corresponding to the access entry.

In some embodiments, the access entry is a first access entry, and the process 300 further includes: in response to the target object being in a live streaming state, modifying the first indication element to a second indication element, the second indication element corresponding to a second access entry of a live streaming interface of the target object.

In some embodiments, the first indication element has a dynamic display style.

In some embodiments, the target interface is a viewing interface of a target work associated with the target object, and providing the access entry associated with the virtual object in the target interface includes: presenting, in a work play area of the viewing interface, a second indication element corresponding to the access entry; and/or presenting, in association with second identification information of the target work, a third indication element corresponding to the access entry.

In some embodiments, the target interface includes a personal homepage of the target object, and providing the access entry associated with the virtual object in the target interface includes: presenting, in a background area of the personal homepage, a visual element associated with the virtual object, to make the background area correspond to the access entry.

In some embodiments, the target interface is configured to present target media content in a media content stream, the media content stream includes a plurality of items of media content, the target interface is further configured to switch to present another piece of media content in the media content stream based on a switching operation for the media content stream.

In some embodiments, the target media content includes one of the following: a media work associated with the target object, first preview content associated with a live streaming event of the target object, or second preview content associated with the virtual object.

In some embodiments, the multimodal interaction includes a plurality of interactions of: text interaction, voice interaction, video interaction, or picture interaction.

In some embodiments, the interactive interface is a first interactive interface with a first virtual object, and the process 300 further includes: presenting, based on a preset operation received in the first interactive interface, a second interactive interface with a second virtual object, the second virtual object corresponding to another object different from the target object.

In some embodiments, the interactive interface is configured to provide an interactive container for supporting the multimodal interaction between the current user and the virtual object, participants in the interactive container are the current user and the virtual object.

### Example Apparatus and Device

The embodiments of the present disclosure further provide corresponding apparatuses for implementing the above methods or processes. Fig. 4 is a schematic structural block diagram of an interaction apparatus 400 according to some embodiments of the present disclosure. The apparatus 400 may be implemented as or included in the electronic device 110. Each module/component in the apparatus 400 may be implemented by hardware, software, firmware, or any combination thereof.

As shown in Fig. 4, the apparatus 400 includes a first presenting module 410 configured to present a target interface associated with a target object; an entry providing module 420 configured to provide, in response to determining that the target object is configured with a corresponding virtual object, an access entry associated with the virtual object in the target interface; and a second presenting module 430 configured to present, based on a selection of the access entry, an interactive interface with the virtual object, the interactive interface being configured to support multimodal interaction between a current user and the virtual object.

In some embodiments, the target interface displays first identification information of the target object, and the entry providing module 420 is further configured to: present, in association with the first identification information of the target object, a first indication element corresponding to the access entry.

In some embodiments, the access entry is a first access entry, and the apparatus 400 further includes an element modifying module configured to modify, in response to the target object being in a live streaming state, the first indication element to a second indication element, wherein the second indication element corresponds to a second access entry of a live streaming interface of the target object.

In some embodiments, the first indication element has a dynamic display style.

In some embodiments, the target interface is a viewing interface of a target work associated with the target object, and the entry providing module 420 is further configured to present, in a work play area of the viewing interface, a second indication element corresponding to the access entry; and/or present, in association with second identification information of the target work, a third indication element corresponding to the access entry.

In some embodiments, the target interface includes a personal homepage of the target object, and the entry providing module 420 is further configured to present, in a background area of the personal homepage, a visual element associated with the virtual object, to make the background area correspond to the access entry.

In some embodiments, the target interface is used to present target media content in a media content stream, the media content stream includes a plurality of items of media content, the target interface is further configured to switch to present another piece of media content in the media content stream based on a switching operation for the media content stream.

In some embodiments, the target media content includes one of the following: a media work associated with the target object; first preview content associated with a live streaming event of the target object; second preview content associated with the virtual object.

In some embodiments, the multimodal interaction includes a plurality of interactions of: text interaction, voice interaction, video interaction, picture interaction.

In some embodiments, the interactive interface is a first interactive interface with a first virtual object, and the apparatus 400 further includes an interface switching module configured to present, based on a preset operation received in the first interactive interface, a second interactive interface with a second virtual object, the second virtual object corresponds to another object different from the target object.

In some embodiments, the interactive interface is configured to provide an interactive container for supporting the multimodal interaction between the current user and the virtual object, participants in the interactive container are the current user and the virtual object.

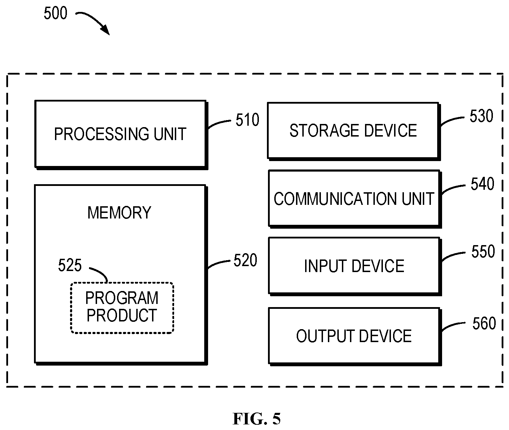

Fig. 5 shows a block diagram of an electronic device 500 in which one or more embodiments of the present disclosure may be implemented. It should be understood that the electronic device 500 shown in Fig. 5 is only illustrative, and should not constitute any limitation on the functionality and scope of the embodiments described herein. The electronic device 500 shown in Fig. 5 may be used to implement the electronic device 110 in Fig. 1.

As shown in Fig. 5, the electronic device 500 is in a form of a general-purpose electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor, and may execute various processes based on the programs stored in the memory 520. In a multi-processor system, a plurality of processing units execute computer executable instructions in parallel, so as to improve the parallel processing capability of the electronic device 500.

The electronic device 500 typically includes a plurality of computer storage medium. Such medium may be any available medium accessible by the electronic device 500, including, but not limited to, volatile and non-volatile medium, and removable and non-removable medium. The memory 520 may be a volatile memory (for example, a register, cache, a random access memory (RAM)), a non-volatile memory (such as a read-only memory (ROM), an electrically erasable programmable read-only memory (EEPROM), a flash memory), or any combination thereof. The storage device 530 may be any removable or non-removable medium, and may include a machine-readable medium such as a flash drive, a disk, or any other medium, which may be used to store information and/or data and may be accessed within the electronic device 500.

The electronic device 500 may further include additional removable/non-removable, volatile/non-volatile memory medium. Although not shown in Fig. 5, it is possible to provide a disk driver for reading from or writing into removable and non-volatile disks (such as a "floppy disk"), and an optical disk driver for reading from or writing into removable and non-volatile optical disks. In these cases, each driver may be connected to the bus (not shown) by one or more data medium interfaces. The memory 520 may include a computer program product 525, which has one or more program modules configured to perform various methods or acts of the various embodiments of the present disclosure.

The communication unit 540 implements communication with other electronic devices through the communication medium. Additionally, the functions of the components of the electronic device 500 may be implemented by a single computing cluster or a plurality of computing machines, which may communicate through communication connections. Therefore, the electronic device 500 may use a logical connection with one or more other servers, a network personal computer (PC), or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may further communicate with one or more external devices (not shown) through the communication unit 540 as needed, the external device is such as a storage device, a display device, etc., communicate with one or more devices enabling the user to interact with the electronic device 500, or communicate with any devices (such as a network card, a modem, etc.) enabling the electronic device 500 to communicate with one or more other electronic devices. Such communication may be performed via input/output (I/O) interfaces (not shown).

According to an example implementation of the present disclosure, a computer-readable storage medium is provided, which has computer executable instructions stored thereon, where the computer executable instructions are executed by a processor to implement the method described above. According to an example implementation of the present disclosure, a computer program product is further provided. The computer program product is tangibly stored on a non-transitory computer-readable medium and includes computer executable instructions, and the computer executable instructions are executed by a processor to implement the method described above.

Various aspects of the present disclosure are described herein with reference to flowcharts and/or block diagrams of methods, apparatuses, devices, and computer program products implemented according to the present disclosure. It should be understood that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that these instructions, when executed by the processing unit of the computer or other programmable data processing apparatus, produce an apparatus for implementing functions/acts specified in one or more blocks of the flowcharts and/or block diagrams. These computer-readable program instructions may also be stored in a computer-readable storage medium, these instructions causing the computer, the programmable data processing apparatus, and/or other devices to work in a specific manner, and thus, the computer-readable medium storing the instructions includes a manufactured product including instructions for implementing various aspects of the functions/acts specified in one or more blocks of the flowcharts and/or block diagrams.

The computer-readable program instructions may be loaded onto a computer, other programmable data processing apparatus, or other devices, such that a series of operation steps are performed on the computer, other programmable data processing apparatus, or other devices to produce a computer-implemented process, and thus, the instructions executed on the computer, other programmable data processing apparatus, or other devices implement the functions/acts specified in one or more blocks of the flowcharts and/or block diagrams.

The flowcharts and block diagrams in the drawings show the architecture, functionality, and operation of possible implementations of systems, methods, and computer program products according to various implementations of the present disclosure. In this regard, each block in the flowcharts or block diagrams may represent a module, program segment, or part of instruction, and the module, program segment, or part of instruction contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or flowcharts, and combinations of blocks in the block diagrams and/or flowcharts, may be implemented by a special-purpose hardware-based system that perform specified functions or acts, or may be implemented by a combination of special-purpose hardware and computer instructions.

The implementations of the present disclosure have been described above, and the above description is illustrative, not exhaustive, and not limited to the disclosed implementations. Many modifications and changes will be apparent to those of ordinary skill in the art without departing from the scope and spirit of the described implementations. The terms used herein are intended to best explain the principles, practical applications, or improvements to the technology in the market of each implementation, or to enable other ordinary skilled persons in the art to understand the various implementations disclosed herein.

## Claims

1. An interaction method, comprising:
presenting a target interface associated with a target object;
providing, in response to determining that the target object is configured with a corresponding virtual object, an access entry associated with the virtual object in the target interface; and
presenting, based on a selection of the access entry, an interactive interface with the virtual object, the interactive interface being configured to support multimodal interaction between a current user and the virtual object.

2. The method of claim 1, wherein the target interface displays first identification information of the target object, and providing the access entry associated with the virtual object in the target interface comprises:
presenting, in association with the first identification information of the target object, a first indication element corresponding to the access entry.

3. The method of claim 2, wherein the access entry is a first access entry, and the method further comprises:
modifying, in response to the target object being in a live streaming state, the first indication element to a second indication element, the second indication element corresponding to a second access entry of a live streaming interface of the target object.

4. The method of claim 2, wherein the first indication element has a dynamic display style.

5. The method of claim 1, wherein the target interface is a viewing interface of a target work associated with the target object, and providing the access entry associated with the virtual object in the target interface comprises:
presenting, in a work play area of the viewing interface, a second indication element corresponding to the access entry; and/or
presenting, in association with second identification information of the target work, a third indication element corresponding to the access entry.

6. The method of claim 1, wherein the target interface comprises a personal homepage of the target object, and providing the access entry associated with the virtual object in the target interface comprises:
presenting, in a background area of the personal homepage, a visual element associated with the virtual object, to make the background area correspond to the access entry.

7. The method of claim 1, wherein the target interface is configured to present target media content in a media content stream, the media content stream comprising a plurality of items of media content, the target interface being further configured to switch to present another piece of media content in the media content stream based on a switching operation for the media content stream.

8. The method of claim 7, wherein the target media content comprises one of the following:
a media work associated with the target object;
first preview content associated with a live streaming event of the target object;
second preview content associated with the virtual object.

9. The method of claim 1, wherein the multimodal interaction comprises a plurality of interactions of: text interaction, voice interaction, video interaction, picture interaction.

10. The method of claim 1, wherein the interactive interface is a first interactive interface with a first virtual object, and the method further comprises:
presenting, based on a preset operation received in the first interactive interface, a second interactive interface with a second virtual object, the second virtual object corresponding to another object different from the target object.

11. The method of claim 1, wherein the interactive interface is configured to provide an interactive container for supporting the multimodal interaction between the current user and the virtual object, participants in the interactive container being the current user and the virtual object.

12. An interaction apparatus, comprising:
a first presenting module configured to present a target interface associated with a target object;
an entry providing module configured to provide, in response to determining that the target object is configured with a corresponding virtual object, an access entry associated with the virtual object in the target interface; and
a second presenting module configured to present, based on a selection of the access entry, an interactive interface with the virtual object, the interactive interface being configured to support multimodal interaction between a current user and the virtual object.

13. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 11.

14. A computer-readable storage medium having a computer program stored thereon, the computer program being executable by a processor to implement the method of any of claims 1 to 11.
